# EUROPEAN PATENT SPECIFICATION

(11) **EP 2 622 255 B1**
(45) Date of publication and mention of the grant of the patent: **12.04.2017**
(21) Application number: 11770297.7
(22) Date of filing: 30.09.2011
(51) Int. Cl.: F17C 13/08, B64D 37/06

(54) **CRYOGENIC FUEL STORAGE SYSTEM FOR AN AIRCRAFT**
BRENNSTOFFSPEICHERSYSTEM
SYSTÈME DE STOCKAGE DE COMBUSTIBLE CRYOGÉNIQUE POUR UN AVION

(30) Priority: 17.06.2011 US 201161498271 P; 30.09.2010 US 388379 P; 17.06.2011 US 201161498276 P
(43) Date of publication of application: 07.08.2013
(73) Proprietor: General Electric Company, Schenectady, NY 12345 (US)
(72) Inventor: EPSTEIN, Michael, Jay, Cincinnati OH 45215 (US); VONDRELL, Randy, M., Cincinnati OH 45215 (US); WEISGERBER, Robert, Harold, Cincinnati OH 45215 (US); JOSHI, Narendra, Cincinnati OH 45215 (US); BONSER, Thomas, Cincinnati OH 45215 (US)
(74) Representative: Williams, Andrew Richard
(86) International application number: PCT/US2011/054415
(87) International publication number: WO 2012/045035

(56) References cited:
- US-A- 3 724 228
- US-A1- 2005 224 514
- US-A1- 2007 199 941
- US-A1- 2008 209 917
- US-A1- 2008 307 798

## Description

The technology described herein relates generally to aircraft systems, and more specifically to aircraft fuel storage systems.

Certain cryogenic fuels such as liquefied natural gas (LNG) may be cheaper than conventional jet fuels. However, current approaches to fuel storage in aircraft have evolved and matured through the years based on the properties of conventional jet fuels which are stored as a liquid under typical atmospheric pressures.

Accordingly, it would be desirable to have aircraft fuel storage systems which provide for safe, efficient, and economical storage of cryogenic fuels such as liquefied natural gas (LNG), particularly in combination with other conventional fuel storage systems aboard the aircraft.

US 3,724,228 relates to a composite insulation for a cryogenic vessel and discloses features generally corresponding to the preamble of claim 1 herein. US 2008/0307798 A1 relates to a cryogenic liquid storage tank and discloses the introduction of cryogenic vapor as a purge gas into an insulation space defined between an inner vessel and an outer vessel, where the cryogenic vapor originates from a ullage space of the inner vessel (see paragraph 25 thereof). US 2005/0224514 A1 relates to a replaceable cartridge for the storage of liquid hydrogen and discloses venting of hydrogen from the interior of an interior tank in the event of overpressure within the interior tank (see paragraph 33 thereof).

A cryogenic fuel storage system for an aircraft is provided in accordance with the appended claims.

A cryogenic fuel storage system 10 for an aircraft is also disclosed including a cryogenic fuel tank 22 having a first wall 23 forming a storage volume 24 capable of storing a cryogenic liquid fuel 12; an inflow system 32 capable of flowing the cryogenic liquid fuel 12 into the storage volume 24; an outflow system 30 adapted to deliver the cryogenic liquid fuel 12 from the cryogenic fuel storage system 10; and a vent system
40 capable of removing at least a portion of a gaseous fuel 19 formed from the cryogenic liquid fuel 12 in the storage volume 24.

The technology described herein may be best understood by reference to the following description taken in conjunction with the accompanying drawing figures in which:
FIG. 1 is an isometric view of an aircraft system having a dual fuel propulsion system;
FIG. 2 is a schematic figure showing an arrangement, falling outside the scope of the claims, of a fuel tank and exemplary boil off usage;
FIG. 3 is a schematic view of an example of a fuel storage tank;
FIG. 4 is a schematic view of an exemplary embodiment of a fuel storage tank and best illustrates the features of the characterizing portion of claim 1;
FIG. 5 is a schematic view of an example of a fuel storage tank located in one possible storage location in an aircraft;
FIG. 6 is a schematic view of an example of multiple fuel storage tanks located in one possible storage location in an aircraft;
FIG. 7 is a schematic view of an example of a fuel storage tank located in one possible storage location in an aircraft;
FIG. 8 is a schematic view of an example of multiple fuel storage tanks located in one possible storage location in an aircraft;
FIG. 9 is a schematic view of an example of multiple fuel storage tanks located in one possible storage location in an aircraft; and
FIG. 10 is a schematic view of an example of multiple fuel storage tanks located in one possible storage location in an aircraft.

Referring to the drawings herein, identical reference numerals denote the same elements throughout the various views.

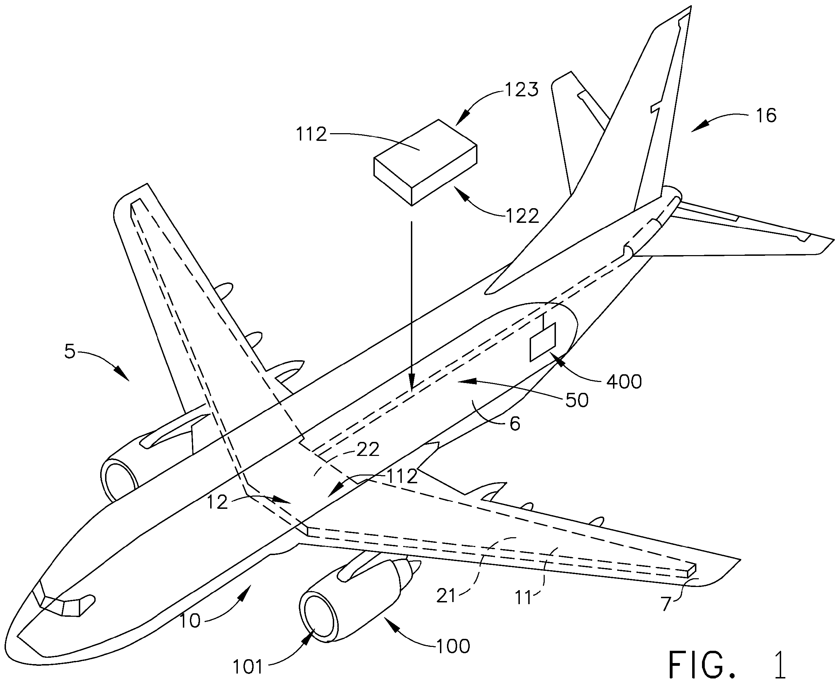

FIG. 1 shows an aircraft system 5. The aircraft system 5 has a fuselage 6 and wings 7 attached to the fuselage. The aircraft system 5 has a propulsion system 100 that produces the propulsive thrust required to propel the aircraft system in flight. Although the propulsion system 100 is shown attached to the wing 7 in FIG. 1, it may be coupled to other parts of the aircraft system 5, such as, for example, the tail portion 16.

The aircraft system 5 has a fuel storage system 10 for storing one or more types of fuels that are used in the propulsion system 100. The aircraft system 5 shown in FIG. 1 uses two types of fuels, as explained further below herein. Accordingly, the aircraft system 5 comprises a first fuel tank 21 capable of storing a first fuel 11 and a second fuel tank 22 capable of storing a second fuel 12. In the aircraft system 5 shown in FIG. 1, at least a portion of the first fuel tank 21 is located in a wing 7 of the aircraft system 5. In one example, shown in FIG. 1, the second fuel tank 22 is located in the fuselage 6 of the aircraft system near the location where the wings are coupled to the fuselage. Alternatively, the second fuel tank 22 may be located at other suitable locations in the fuselage 6 or the wing 7. In other examples, the aircraft system 5 may comprise an optional third fuel tank 123 capable of storing the second fuel 12. The optional third fuel tank 123 may be located in an aft portion of the fuselage of the aircraft system, such as for the example shown schematically in FIG. 1.

As further described later herein, the propulsion system 100 shown in FIG. 1 is a dual fuel propulsion system that is capable of generating propulsive thrust by using the first fuel 11 or the second fuel 12 or using both first fuel 11 and the second fuel 12. The exemplary dual fuel propulsion system 100 comprises a gas turbine engine 101 capable of generating a propulsive thrust selectively using the first fuel 11, or the second fuel 12, or using both the first fuel and the second fuel at selected proportions. The first fuel may be a conventional liquid fuel such as a kerosene based jet fuel such as known in the art as Jet-A, JP-8, or JP-5 or other known types or grades. In the examples described herein, the second fuel 12 is a cryogenic fuel that is stored at very low temperatures. In one example described herein, the cryogenic second fuel 12 is Liquefied Natural Gas (alternatively referred to herein as "LNG"). The cryogenic second fuel 12 is stored in the fuel tank at a low temperature. For example, the LNG is stored in the second fuel tank 22 at about -265 Deg. F at an absolute pressure of about 15 psia. The fuel tanks may be made from known materials such as titanium, Inconel, aluminum or composite materials.

The aircraft system 5 shown in FIG. 1 comprises a fuel delivery system 50 capable of delivering a fuel from the fuel storage system 10 to the propulsion system 100. Known fuel delivery systems may be used for delivering the conventional liquid fuel, such as the first fuel 11. In the examples described herein, and shown in FIG. 1, the fuel delivery system 50 is configured to deliver a cryogenic liquid fuel, such as, for example, LNG, to the propulsion system 100 through conduits that transport the cryogenic fuel.

The aircraft system 5 shown in FIG. 1 further includes a fuel cell system 400, comprising a fuel cell capable of producing electrical power using at least one of the first fuel 11 or the second fuel 12. The fuel delivery system 50 is capable of delivering a fuel from the fuel storage system 10 to the fuel cell system 400. In one example, the fuel cell system 400 generates power using a portion of a cryogenic fuel 12 used by a dual fuel propulsion system 100.

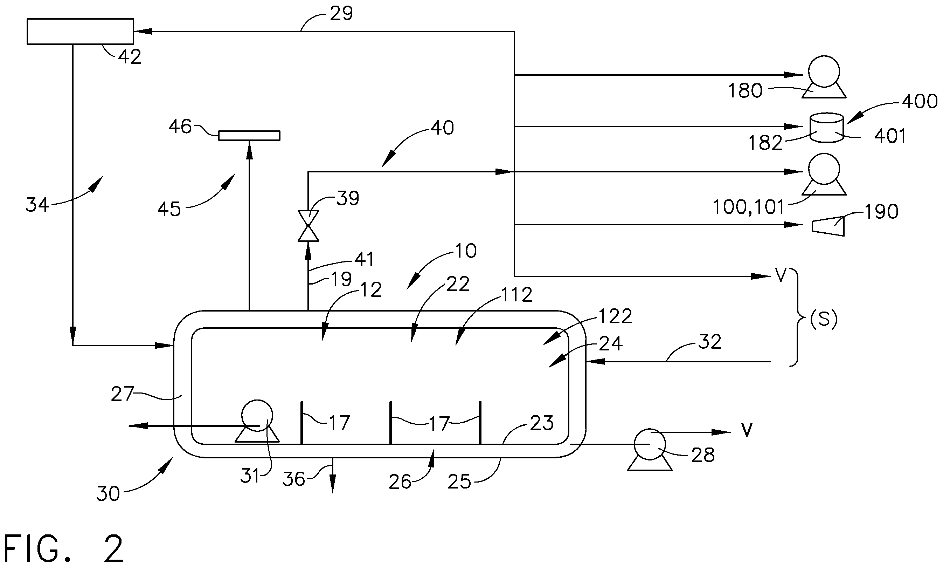

The aircraft system 5 shown in FIG. 1 comprises a cryogenic fuel storage system 10, such as shown for example, in FIG. 2, for storing a cryogenic fuel. The cryogenic fuel storage system 10 comprises a cryogenic fuel tank 22, 122 having a first wall 23 forming a storage volume 24 capable of storing a cryogenic liquid fuel 12 such as for example LNG. As shown schematically in FIG. 2 (which falls outside the scope of the claims), the cryogenic fuel storage system 10 illustrated has an inflow system 32 capable of flowing the cryogenic liquid fuel 12 into the storage volume 24 and an outflow system 30 adapted to deliver the cryogenic liquid fuel 12 from the cryogenic fuel storage system 10. It further comprises a vent system 40 capable of removing at least a portion of a gaseous fuel 19 (that may be formed during storage) from the cryogenic liquid fuel 12 in the storage volume 24.

The non-claimed cryogenic fuel storage system 10 shown in FIG. 2 further comprises a recycle system 34 that is adapted to return at least a portion 29 of unused gaseous fuel 19 into the cryogenic fuel tank 22. In one example, the recycle system 34 comprises a cryo-cooler 42 that cools the portion 29 of unused gaseous fuel 19 prior to returning it into the cryogenic fuel tank 22, 122. An exemplary operation of the cryo-cooler 42 operation is as follows: In an example, boil off from the fuel tank can be recooled using a reverse Rankine refrigeration system, also known as a cryo cooler. The cryo cooler can be powered by electric power coming from any of the available systems on board the aircraft system 5, or, by ground based power systems such as those which may be available while parked at a boarding gate. The cryo cooler system can also be used to re-liquefy natural gas in the fuel system during the dual fuel aircraft gas turbine engine 101 co-fire transitions.

The fuel storage system 10 may further comprise a safety release system 45 adapted to vent any high pressure gases that may be formed in the cryogenic fuel tank 22. In one example, shown schematically in FIG. 2, the safety release system 45 comprises a rupture disk 46 that forms a portion of the first wall 23. The rupture disk 46 is a safety feature, designed using known methods, to blow out and release any high pressure gases in the event of an over pressure inside the fuel tank 22.

The cryogenic fuel tank 22 may have a single wall construction or a multiple wall construction. For example, the cryogenic fuel tank 22 further comprises (See FIG. 2) a second wall 25 that substantially encloses the first wall 23. There is a gap 26 between the first wall 23 and the second wall 25 in order to thermally insulate the tank to reduce heat flow across the tank walls. In one example, there is a vacuum in the gap 26 between the first wall 23 and the second wall 25. The vacuum may be created and maintained by a vacuum pump 28. Alternatively, in order to provide thermal insulation for the tank, the gap 26 between the first wall 23 and the second wall 25 may be substantially filled with a known thermal insulation material 27, such as, for example, Aerogel. Other suitable thermal insulation materials may be used. Baffles 17 may be included to control movement of liquid within the tank.

The cryogenic fuel storage system 10 shown in FIG. 2 comprises the outflow system 30 having a delivery pump 31. The delivery pump may be located at a convenient location near the tank 22. In order to reduce heat transfer in to the cryogenic fuel, it may be preferable to locate the delivery pump 31 in the cryogenic fuel tank 22 as shown schematically in FIG. 2. The vent system 40 vents any gases that may be formed in the fuel tank 22. These vented gases may be utilized in several useful ways in the aircraft system 5. A few of these are shown schematically in FIG. 2. For example at least a portion of the gaseous fuel 19 may be supplied to the aircraft propulsion system 100 for cooling or combustion in the engine. In another example, the vent system 40 supplies at least a portion of the gaseous fuel 19 to a burner and further venting the combustion products from the burner safely outside the aircraft system 5. In another example the vent system 40 supplies at least a portion of the gaseous fuel 19 to an auxiliary power unit 180 that supplies auxiliary power to the aircraft system 5. In another example the vent system 40 supplies at least a portion of the gaseous fuel 19 to a fuel cell 182 that produces power. In another example, the vent system 40 releases at least a portion of the gaseous fuel 19 outside the cryogenic fuel tank 22.

The exemplary operation of the fuel storage system, its components including the fuel tank, and exemplary sub systems and components is described as follows.

Natural gas exists in liquid form (LNG) at temperatures of approximately about - 260°F and atmospheric pressure. To maintain these temperatures and pressures on board a passenger, cargo, military, or general aviation aircraft, the features identified below, in selected combinations, allow for safe, efficient, and cost effective storage of LNG. Referring to FIG. 2 (which falls outside the scope of the claims), these include:
(A) A fuel tank 21, 22 constructed of alloys such as, but not limited to, aluminum AL 5456 and higher strength aluminum AL 5086 or other suitable alloys.
(B) A fuel tank 21, 22 constructed of light weight composite material.
(C) The above tanks 21, 22 with a double wall vacuum feature for improved insulation and greatly reduced heat flow to the LNG fluid. The double walled tank also acts as a safety containment device in the rare case where the primary tank is ruptured.
(D) An alternative of either the above utilizing lightweight insulation 27, such as, for example, Aerogel, to minimize heat flow from the surroundings to the LNG tank and its contents. Aerogel insulation can be used in addition to, or in place of a double walled tank design.
(E) A vacuum pump 28 designed for active evacuation of the space between the double walled tank. The pump can operate off of LNG boil off fuel, LNG, Jet-A, electric power or any other power source available to the aircraft.
(F) An LNG tank with a cryogenic pump 31 submerged inside the primary tank for reduced heat transfer to the LNG fluid.
(G) An LNG tank with one or more drain lines 36 capable of removing LNG from the tank under normal or emergency conditions. The LNG drain line 36 is connected to a suitable cryogenic pump to increase the rate of removal beyond the drainage rate due to the LNG gravitational head.
(H) An LNG tank with one or more vent lines 41 for removal of gaseous natural gas, formed by the absorption of heat from the external environment. This vent line 41 system maintains the tank at a desired pressure by the use of a 1 way relief valve or back pressure valve 39.
(I) An LNG tank with a parallel safety relief system 45 to the main vent line, should an overpressure situation occur. A burst disk is an alternative feature or a parallel feature 46. The relief vent would direct gaseous fuel overboard.
(J) An LNG fuel tank, with some or all of the design features above, whose geometry is designed to conform to the existing envelope associated with a standard Jet-A auxiliary fuel tank such as those designed and available on commercially available aircrafts.
(K) An LNG fuel tank, with some or all of the design features above, whose geometry is designed to conform to and fit within the lower cargo hold(s) of conventional passenger and cargo aircraft such as those found on commercially available aircrafts.
(L) Modifications to the center wing tank 22 of an existing or new aircraft to properly insulate the LNG, tank, and structural elements.

Venting and boil off systems are designed using known methods. Boil off of LNG is an evaporation process which absorbs energy and cools the tank and its contents. Boil off LNG can be utilized and / or consumed by a variety of different processes, in some cases providing useful work to the aircraft system, in other cases, simply combusting the fuel for a more environmentally acceptable design. For example, vent gas from the LNG tank consists primarily of methane and is used for any or all combinations of the following:
(A) Routing to the Aircraft APU (Auxiliary Power Unit) 180. As shown in FIG. 2, a gaseous vent line from the tank is routed in series or in parallel to an Auxiliary Power Unit for use in the combustor. The APU can be an existing APU, typically found aboard commercial and military aircraft, or a separate APU dedicated to converting natural gas boil off to useful electric and/or mechanical power. A boil off natural gas compressor is utilized to compress the natural gas to the appropriate pressure required for utilization in the APU. The APU, in turn, provides electric power to any system on the engine or A/C.
(B) Routing to one or more aircraft gas turbine engine(s) 101. As shown in FIG. 2, a natural gas vent line from the LNG fuel tank is routed to one or more of the main gas turbine engines 101 and provides an additional fuel source to the engine during operation. A natural gas compressor is utilized to pump the vent gas to the appropriate pressure required for utilization in the aircraft gas turbine engine.
(C) Flared. As shown in FIG. 2, a natural gas vent line from the tank is routed to a small, dedicated vent combustor 190 with its own electric spark ignition system. In this manner methane gas is not released to the atmosphere. The products of combustion are vented, which results in a more environmentally acceptable system.
(D) Vented. As shown in FIG. 2, a natural gas vent line from the tank is routed to the exhaust duct of one or more of the aircraft gas turbines. Alternatively, the vent line can be routed to the APU exhaust duct or a separate dedicated line to any of the aircraft trailing edges. Natural gas may be suitably vented to atmosphere at one or more of these locations V.
(E) Ground operation. As shown in FIG. 2, during ground operation, any of the systems can be designed such that a vent line 41 is attached to ground support equipment, which collects and utilizes the natural gas boil off in any ground based system. Venting can also take place during refueling operations with ground support equipment that can simultaneously inject fuel into the aircraft LNG tank using an inflow system 32 and capture and reuse vent gases (simultaneous venting and fueling indicated as (S) in FIG. 2).

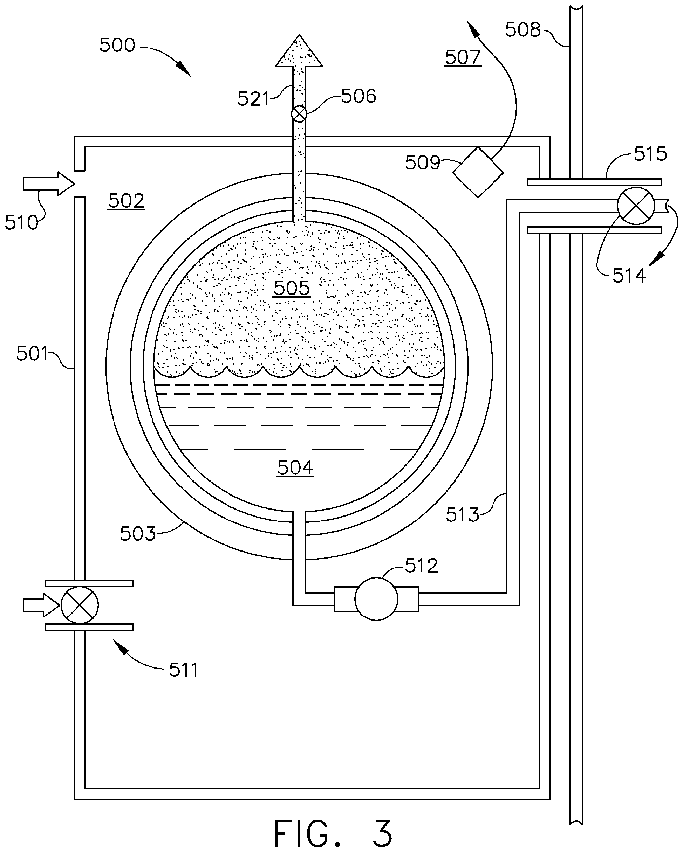

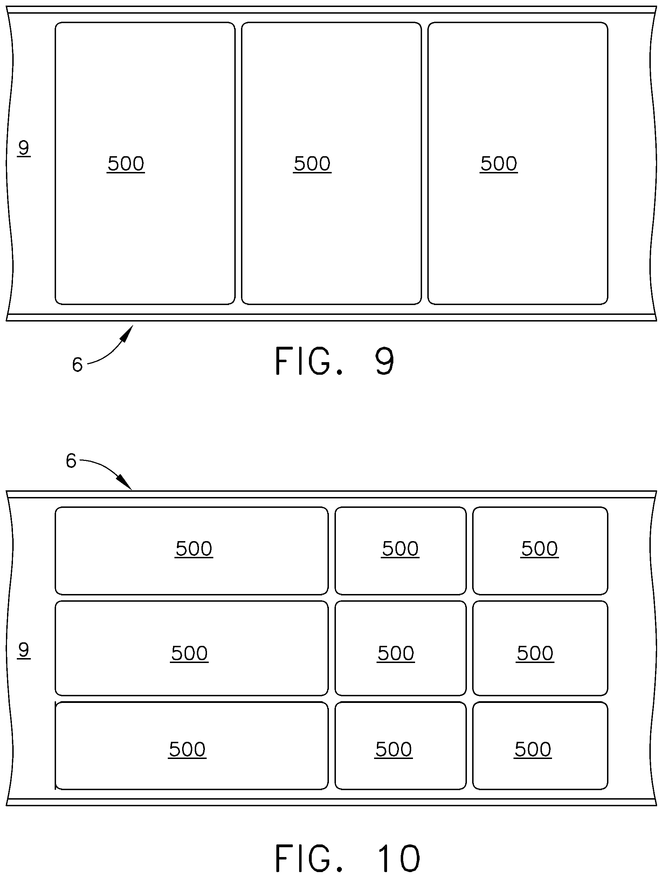

FIGs. 3-10 illustrate examples of a removable "roll-on roll-off" LNG fuel tank system 500 for an aviation application. While much of the description herein pertains to LNG fuel, this tank concept can be used for any other gaseous / cryogenic fuels. The fuel tank system is for use in an aviation application where flexibility in the use of the aircraft's internal space is desired.

The roll-on roll-off tank 500 is a self contained, modular fuel system that is made up of an outer shell 501 that forms the boundary between the aircraft environment 507 and the inside 502 of the fuel system that can contain only the vessel of fuel 503 (in the most desirable application is LNG only) or the tank system may contain the vessel of fuel 503 along with any of the desired valves, tubes, ventilation, heat exchangers, controls, and gas detectors as well. The outside shell 501 can be a sealed shell to eliminate the mixing of aircraft atmosphere with that within the fuel system. This outer shell 501 is structural in nature to withstand any desirable differential pressure the designer wishes to operate as well as provide a measure of physical protection for the vessel 503. The outer shell 501 may also be configured in any suitable size and shape adapted to be loaded and secured into the aircraft, such as the examples shown in FIGS. 3-10, and may include wheels and/or casters so as to be a truly roll-on roll-off modular fuel tank system. Such a system may also be self-contained with only minimal electrical and plumbing connections required to connect the system to the aircraft systems.

The vessel of fuel 503 inside the roll-on roll-off fuel tank system outer shell 501 could be an industry standard vessel designed for the efficient storage of cryogenic fluids or one designed with special features for monitoring and managing the integrity of the fuel storage vessel itself.

The fuel vessel 503 inside the outer shell can be designed to be operated at ambient pressures or at elevated pressures as the design of the entire system may demand. Independent of the fuel vessel operating pressures, the fuel vessel may be purged with an inert material, such as nitrogen, for example, whether another cryogenic fluid or gas to minimize opportunities for combustion to occur within the vessel itself.

The space 502 inside the outer shell 501 of the roll-on roll-off fuel tank system 500 can be surveyed for a gas leak by the use of gas monitoring sensor(s) 509. Since LNG is lighter than air, the gas leak detectors can / should be placed high within the shell volume. To reduce the combustion capability within the shell's volume, an inert gas (such as nitrogen, for example) may be introduced at 510 to purge the shell's inner volume of air. If a lighter inerting gas is used like helium, the gas leak detectors may be placed near the bottom of the volume. A check valve or other feature 511 may be used for flow control or other management of the internal volume 502.

As shown in FIG. 3 (which is illustrative of some of the features of the claimed invention), the vessel 503 includes liquid fuel 504 and a headspace 505 which typically contains gaseous fuel vapors. A vent line 521 with a valve 506 may be used to draw from or manage the gaseous fuel headspace 505, and/or manage the pressure within the vessel 503. The vessel outer wall may be insulated and/or a multiple wall construction.

It is preferred to vent the shell's inner volume 502 to avoid the collection of gas if a leak occurs. The preferred geometry is to connect the vent of the roll-on roll-off fuel tank system to the outside / ambient atmosphere via a vent tube 515 through the aircraft's pressure bulkhead 508. A restricting orifice or valve 514 may be used to control the flow rate of the venting. Since the fuel gas is lighter than air, the venting exit area may be placed high through the outer shell to preferentially eliminate gas pocketing or collection. If gas is detected, a higher purge rate may be selected if desired. Due to the lower outside pressure at altitude and the higher internal aircraft pressure, a natural air purge system can be accomplished. If the designer desires, an inert gas purge system can be utilized for the entire flight or for only portions where lower pressure differentials exist.

The fuel from the inner fuel vessel will be delivered to the rest of the system through a shrouded tube that can contain a vacuum for thermal insulation. This fuel line 513 and any of the fuel vessel's vent and fill lines can be routed out of the fuel tank's outer shell 501 through the system vent outlet as described above. The described vent above is channeled from the outer shell to the bulkhead but may also be shrouded all the way to final destination of the fuel lines thereby utilizing only one vent source for the entire system. An added gas sensor, leak detection, can be used at the exit of the shrouded vent line to take appropriate safety actions. An optional boost pump 512 may be included in the fuel line 513, either within the outer shell 501 as shown or outside the outer shell 501.

Much of the discussion herein focuses on a removable "roll-on roll-off' LNG fuel tank system for an aviation application. While LNG is the most desirable fuel in the short term, this tank concept can be used for any other gaseous / cryogenic fuels. The fuel tank system is adapted and configured for use in an aviation application where flexibility in the use of the aircraft's internal space is desired.

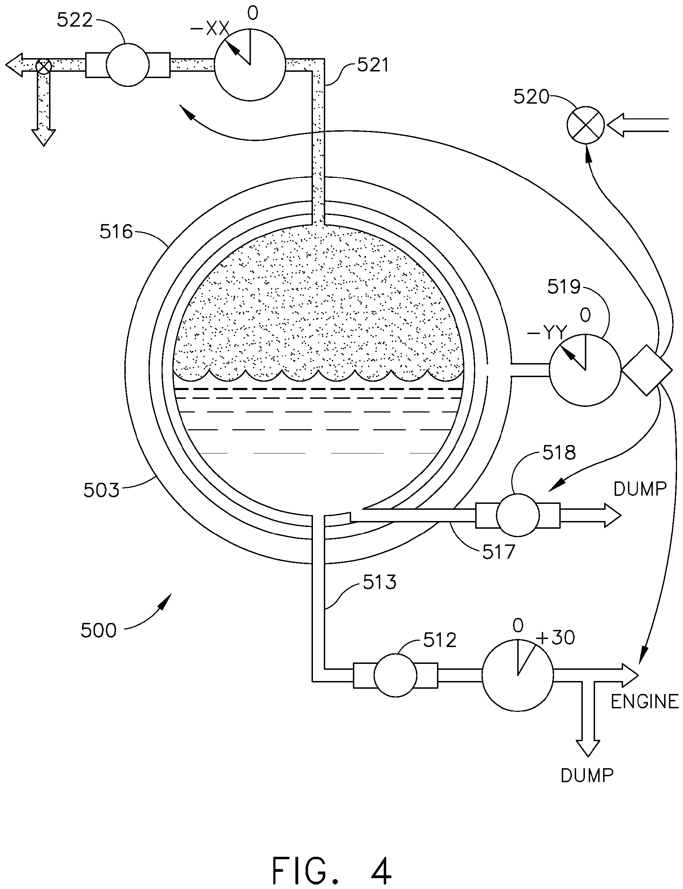

As illustrated in FIG. 4 (which best illustrates the claimed invention), an exemplary LNG fuel tank system 500 may be provided with enhanced safety features for an aviation application. While LNG is the most desirable fuel in the short term, this tank concept can be used for any other gaseous / cryogenic fuels.

An embodiment of the fuel tank system, such as depicted in FIG. 4, is adapted for use in a transportation application, including an aviation application, where enhanced protection against tank penetrations and leaks from the storage tank is desired.

The tank described here is a vacuum insulated tank 503 consisting of an inner tank wall, a vacuum space, and an outer tank wall in its simple form.

The tank could have a boost pump 512 internal to the tank 503 or external. The boost pump may be needed for normal operation or needed if a pressurized tank system is not used.

For safety monitoring of the tank's integrity, a sensor 519 detecting the level of the vacuum between the inner and outer walls can be used. Based on the level of vacuum sensed, other control options may be exercised.

If the vacuum is lost in the case of a tank penetration, an inerting gas purge 520 such as nitrogen may be introduced to either the vapor head over the liquid fuel and or the vacuum space itself. In addition, a scavenge pump 518 can be activated to remove any liquid LNG that may enter the vacuum space as a result of the penetration for discharge through line 517. Simultaneously, or on a desired lead or lag time relative to the purging and scavenging, an additional vacuum pump 522 is configured to activate (as per the scope of the claims) to reduce the tank internal pressure to below that outside the tank to cause inflow of surrounding gas to the tank (rather than outflow) and limit any out flow spills or leaks. The boost pump 512 can also be used in conjunction with a valve to direct any residual fuel to a safe location including overboard the vessel.

An added feature to an LNG or cryogenic fuel tank of this design can be a self sealing coating 516 or structure either internal or external to the tank walls to minimize leakage form penetrations to the tank or structural tank damage.

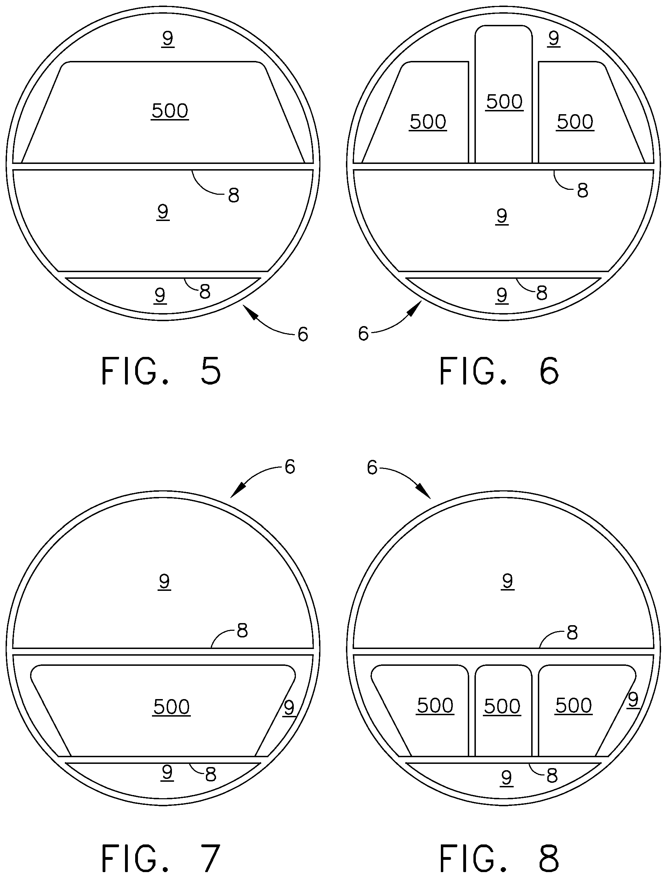

As shown in FIGS. 5-10, the roll-on roll-off fuel tank 500 as described previously described can be conformal to fit in an aircraft space 9 inside a fuselage 6 as desired by the operator. These tanks 500 may be fit above a cargo floor 8 or below a passenger deck 8 as desired. They can be placed length wise or width wise within the fuselage 6 as desired and may be configured so as to be compatible with an existing cargo securement system in the aircraft (tracks, etc.).

The roll-on roll-off tanks 500, when in a plural tank configuration such as depicted in FIGS. 6, 8, 9, and 10, may be cascaded together to set or deliver a desired total fuel capacity. To enable the cascading of tanks, each tank may be connected to the prior tank through its bunkering connections. Likewise, the venting may connected together (tank to tank) so the entire fuel system is a series of conformal tanks and connections to operate as a series. The alternate type of connections would be to have a unique connection between each roll-on roll-off fuel tank system and the aircraft to function as a parallel system.

Roll-on roll-off tanks may be fueled either at the aircraft itself or at the fueling station away from the flight line, subsequently transported and loaded onto the aircraft and connected in the full condition.

This written description uses examples to disclose the invention, including the best mode, and also to enable any person skilled in the art to make and use the invention. The patentable scope of the invention may include other examples falling within the scope of the claims that occur to those skilled in the art.

## Claims

1. A cryogenic fuel storage system (500) for an aircraft comprising:
a cryogenic fuel tank (503) forming a storage volume capable of storing a cryogenic liquid fuel (504);
an outer shell (501) at least partially surrounding said cryogenic fuel tank (503) and defining an interior space (502) between said cryogenic fuel tank (503) and said outer shell (501); and
a purge system (510) configured to introduce an inert gas into said interior space (502) to purge said interior space (502);
**characterized in that** the cryogenic fuel storage system (500) further comprises a vacuum pump (522) configured to to be activated so as to reduce internal pressure within said fuel tank (503) to a pressure below that outside of said fuel tank (503).

2. A cryogenic fuel storage system (500) according to claim 1, further comprising a gas monitoring sensor (509) within said interior space (502).

3. A cryogenic fuel storage system (500) according to claim 1, wherein said system (500) is configured so as to be compatible with an existing cargo securement system onboard an aircraft.

4. A cryogenic fuel storage system (500) according to claim 1, wherein said cryogenic fuel tank (503) includes a self sealing coating (516).

5. A cryogenic fuel storage system (500) according to claim 1, wherein said cryogenic fuel tank (503) has inner and outer walls with a vacuum space therebetween, and a sensor (519) for detecting the level of said vacuum.

6. A cryogenic fuel storage system (500) according to claim 1, wherein said system (500) is configured so as to be connectable to other such systems (500).

7. A cryogenic fuel storage system (500) according to claim 1, wherein said system (500) is configured so as to be a roll-on roll-off modular fuel tank system.

## Patentansprüche

1. Kryogentreibstoff-Speichersystem (500) für ein Flugzeug, umfassend:
- einen Kryogentreibstofftank (503), der ein Speichervolumen bildet, das in der Lage ist einen kryogenen Flüssigtreibstoff (504) zu speichern;
- eine Außenhülle (501), die den Kryogentreibstofftank (503) wenigstens teilweise umgibt und einen Innenraum (502) zwischen dem Kryogentreibstofftank (503) und der Außenhülle (501) definiert; und
- ein Spülsystem (510), das dazu ausgebildet ist, ein inertes Gas in den Innenraum (502) einzubringen, um den Innenraum (502) zu spülen,
- **dadurch gekennzeichnet, dass** das Kryogentreibstoff-Speichersystem (500) ferner eine Vakuumpumpe (522) umfasst, die dazu ausgebildet ist, so aktiviert zu werden, dass der Innendruck im Inneren des Treibstofftanks (503) auf einen Druck unter jenem an der Außenseite des Treibstofftanks (503) verringert wird.

2. Kryogentreibstoff-Speichersystem (500) nach Anspruch 1, ferner umfassend einen Gasüberwachungssensor (509) in dem Innenraum (502).

3. Kryogentreibstoff-Speichersystem (500) nach Anspruch 1, wobei das System (500) so ausgebildet ist, dass es mit einem bestehenden Lastsicherungssystem an Bord eines Flugzeugs kompatibel ist.

4. Kryogentreibstoff-Speichersystem (500) nach Anspruch 1, wobei der Kryogentreibstofftank (503) eine selbstabdichtende Beschichtung (516) aufweist.

5. Kryogentreibstoff-Speichersystem (500) nach Anspruch 1, wobei der Kryogentreibstofftank (503) eine Innen- und eine Außenwand mit einem Vakuumraum dazwischen, und einen Sensor (519) zum Detektieren des Grads des Vakuums aufweist.

6. Kryogentreibstoff-Speichersystem (500) nach Anspruch 1, wobei das System (500) so ausgebildet ist, dass es an andere derartige Systeme (500) angeschlossen werden kann.

7. Kryogentreibstoff-Speichersystem (500) nach Anspruch 1, wobei das System (500) so ausgebildet ist, dass es ein modulares Roll-on-roll-off-Treibstofftanksystem ist.

## Revendications

1. Système de stockage de carburant cryogénique (500) pour un aéronef, comprenant :
un réservoir de carburant cryogénique (503) formant un volume de stockage capable de stocker un carburant de liquide cryogénique (504) ;
une coque externe (501) entourant au moins en partie ledit réservoir de carburant cryogénique (503) et définissant un espace intérieur (502) entre ledit réservoir de carburant cryogénique (503) et ladite coque externe (501) ; et
un système de purge (510) configurée pour introduire un gaz inerte dans ledit espace intérieur (502) afin de purger ledit espace intérieur (502) ;
**caractérisé en ce que** le système de stockage de carburant cryogénique (500) comprend en outre une pompe à vide (522) configurée pour être activée afin de réduire la pression interne dans ledit réservoir de carburant (503) à une pression inférieure à celle à l'extérieur dudit réservoir de carburant (503).

2. Système de stockage de carburant cryogénique (500) selon la revendication 1, comprenant en outre un capteur de contrôle de gaz (509) dans ledit espace intérieur (502).

3. Système de stockage de carburant cryogénique (500) selon la revendication 1, dans lequel ledit système (500) est configuré pour être compatible avec un système de fixation de fret existant à bord d'un aéronef.

4. Système de stockage de carburant cryogénique (500) selon la revendication 1, dans lequel ledit réservoir de carburant cryogénique (503) comprend un revêtement d'auto-étanchéité (516).

5. Système de stockage de carburant cryogénique (500) selon la revendication 1, dans lequel ledit réservoir de carburant cryogénique (503) présente des parois interne et externe avec un espace sous vide entre elles, et un capteur (519) pour détecter le niveau dudit vide.

6. Système de stockage de carburant cryogénique (500) selon la revendication 1, dans lequel ledit système (500) est configuré de manière à pouvoir être raccordé à d'autres systèmes (500) de ce type.

7. Système de stockage de carburant cryogénique (500) selon la revendication 1, dans lequel ledit système (500) est configuré de manière à être un système de réservoir de carburant modulaire roll-on/roll-off.
